# EUROPÄISCHE PATENTSCHRIFT

(11) **EP 3 675 628 B1**
(45) Veröffentlichungstag und Bekanntmachung des Hinweises auf die Patenterteilung: **04.10.2023**
(21) Anmeldenummer: 18759921.2
(22) Anmeldetag: 22.08.2018
(51) Int. Cl.: A01M 1/06

(54) **INSEKTENFALLE UND VERFAHREN ZUM ANLOCKEN UND/ODER FANGEN VON FLUGINSEKTEN**
INSECT TRAP AND METHOD FOR ATTRACTING AND/OR CAPTURING FLYING INSECTS
PIÈCE À INSECTES ET PROCÉDÉ PERMETTANT D'ATTIRER ET/OU DE CAPTURER DES INSECTES VOLANT

(30) Priorität: 01.09.2017 DE 102017120212
(43) Veröffentlichungstag der Anmeldung: 08.07.2020
(73) Patentinhaber: Biogents Aktiengesellschaft, 93055 Regensburg (DE)
(72) Erfinder: GEIER, Martin, 92237 Sulzbach-Rosenberg (DE)
(74) Vertreter: Benninger, Johannes
(86) Internationale Anmeldenummer: PCT/EP2018/072651
(87) Internationale Veröffentlichungsnummer: WO 2019/042839

(56) Entgegenhaltungen:
- WO-A1-2014/204162
- WO-A1-2016/116717
- KR-A- 20110 019 061
- KR-A- 20110 087 846
- KR-A- 20120 097 077
- US-A- 5 813 166
- US-A1- 2013 064 679

## Beschreibung

Die vorliegende Erfindung betrifft eine Insektenfalle mit den Merkmalen des unabhängigen Anspruchs 1 sowie ein Verfahren zum Anlocken und/oder Fangen von Flug- und/oder Schädlingsinsekten mit den Merkmalen des unabhängigen Verfahrensanspruchs.

Aus dem Stand der Technik sind zahlreiche Ausführungsvarianten von Insektenfallen bekannt. Eine bekannte und in der Praxis häufig eingesetzte Bauart von solchen Insektenfallen weist ein Gehäuse mit optisch wirksamen Lockreizen und/oder mit darin befindlichen Lockstoffen sowie mit einer Ansaugöffnung auf, die mittels einer als Saugströmung wirkenden Luftströmung das Einfliegen von zu fangenden Fluginsekten in den Falleninnenraum fördert bzw. die Insekten einsaugt und in die Falle hineinbefördert, wo sie fixiert und aufbewahrt und/oder unschädlich gemacht werden.

Eine solche Insektenfalle, die optische Lockreize mit emittierten schwachen Luftströmungen kombiniert, ist aus der EP 1 575 355 B1 bekannt. Bei dieser bekannten Insektenfalle ist eine helle Fläche als Ausströmfläche ausgebildet, die gleichzeitig eine schwache Luftströmung emittiert. Innerhalb der hellen Fläche befindet sich wenigstens eine dunkle Kontraststelle, die als solche von den anzulockenden Insekten wahrgenommen werden kann, und die außerdem als dunkler Ansaugkanal zum Einsaugen der Insekten ausgebildet sein kann. Außerdem kann die Falle mit einem für die anzulockenden Insekten attraktiven Lockstoff ausgestattet sein, der von der Falle emittiert wird.

Weitere Insektenfallen, die mit Gebläsen zum Einsaugen von zu fangenden Fluginsekten ausgestattet sind, gehen bspw. aus der US 4 282 673 A sowie aus der JP 2012 010 653 A hervor. Diese Fallen weisen jeweils charakteristische kegelförmige Fangnetze auf, deren Kegelspitze nach unten weist.

Eine weitere derartige Falle findet sich in der US 5 157 865 A, wobei das dort gezeigte kegelförmige Fangnetz nach unten in einen Sammelbehälter übergeht.

Eine Insektenfalle mit kegelförmigem Innenrohr geht zudem aus der CN 204 157 513 U hervor. Ähnliche Fallen finden sich darüber hinaus in den Dokumenten KR 2012 000 71 93 U, KR 2003 93 447 Y1 sowie KR 2003 67 892 Y1.

Eine weitere Insektenfalle, die mit Luftströmungen arbeitet, findet sich zudem in der KR 101 621 958 B1. Weiter ist auch eine solche Insektenfalle aus einem im Internet publizierten pdf. Dokument bekannt: BG Sentinel 2 Manual_EN web.pdf (Downloadquelle: https://www.bg sentinel.com/downloads/BG_Sentinel_2_Manual_EN_web.pdf)

Angesichts der aus dem Stand der Technik bereits bekannten Insektenfallen kann es als ein vorrangiges Ziel der vorliegenden Erfindung angesehen werden, eine einfach aufgebaute Insektenfalle zu schaffen, die nicht nur sehr effektiv hinsichtlich ihrer Fangwirkung, sondern auch sehr einfach aufgebaut und damit sehr kostengünstig herstellbar ist.

Dieses Ziel wird mit einer Insektenfalle mit den Merkmalen des unabhängigen Anspruchs erreicht. Merkmale vorteilhafter Weiterbildungen der Erfindung finden sich in den abhängigen Ansprüchen.

Zur Erreichung des genannten Ziels schlägt die Erfindung eine Insektenfalle vor, die insbesondere dem Anlocken und/oder Fangen von Flug- und/oder Schädlingsinsekten dienen kann. Diese erfindungsgemäße Insektenfalle weist eine Ansaugöffnung auf, die sich in einen Ansaugkanal fortsetzt, in dem eine die Ansaugöffnung mit Unterdruck bzw. mit einer Saugströmung beaufschlagende Luftströmung herrscht, die zu einem Innenraum der Insektenfalle führt. Zudem weist die Insektenfalle eine den Ansaugkanal in Nähe der Ansaugöffnung umschließenden und den Ansaugkanal im weiteren Bereich in sich änderndem radialen Abstand umhüllenden sowie sich in einer zur Richtung der den Ansaugkanal durchstreichenden Luftströmung parallelen Richtung weitenden, für ausströmende Luft zumindest teilweise durchlässige Oberfläche auf, die zumindest einen Teil einer Außenwandung der Insektenfalle bildet. Außerdem ist die Insektenfalle mit einer sich an die Außenwand anschließenden weitgehend für ein- oder ausströmende Luft undurchlässigen und der Ansaugöffnung gegenüberliegenden Stirn- oder Bodenseite ausgestattet, die zumindest geringfügig beabstandet ist zu einer in den Innenraum der Falle reichenden offenen Stirnseite des Ansaugkanals.

Die für ausströmende Luft zumindest teilweise durchlässige Oberfläche, die einen Teil der Außenwandung der Insektenfalle bildet, kann insbesondere eine netzartige oder maschenartige Struktur aufweisen, deren Maschenweite groß genug ist, dass eine ausreichende Luftströmung dort hindurchpassieren kann, deren Maschenweite jedoch zuverlässig ein Entweichen der im Innenraum der Falle gefangenen Insekten verhindert.

Vorzugsweise ist bei der erfindungsgemäßen Insektenfalle die Stirn- oder Bodenseite durch eine für Luft annähernd undurchlässige Struktur bzw. durch ein für Luft annähernd undurchlässiges Material gebildet. Jedenfalls sollte dort nur gegenüber der ausgeprägteren Luftdurchlässigkeit der netzartigen oder maschenartigen Außenwandung allenfalls nur ein geringer Luftanteil hindurchtreten können. Sinnvoll sind jedoch auch luftdichte Materialen als Bodenmaterial der Insektenfalle. Die Stirn- oder Bodenseite der Insektenfalle kann insbesondere zylindrisch bzw. oval oder mehreckig und flach sein, so dass sie in einer hängenden Anordnung der Insektenfalle mit oberseitiger Ansaugöffnung die untere horizontale Bodenfläche bildet. Ebenso möglich sind jedoch auch gewölbte Konturen, insbesondere eine nach außen leicht konvex gewölbte Kontur der Bodenseite, die gleichzeitig die untere Stirnseite der Insektenfalle bildet.

Die Insektenfalle kann insbesondere in einer Weise ausgestaltet sein, dass sich die Außenwandung der Insektenfalle, ausgehend von einem den Ansaugkanal in Nähe der Ansaugöffnung umschließenden Bereich in Richtung zur Stirn- oder Bodenseite unter Einschluss eines spitzen Öffnungswinkels zur Mittelachse des Ansaugkanals öffnet bzw. weitet. Der spitze Öffnungswinkel zwischen der Außenwandung der Insektenfalle sowie der Mittelachse des Ansaugkanals kann in weiten Grenzen variieren und beispielsweise zwischen etwa zehn Winkelgraden und etwa sechzig Winkelgraden betragen. Eine besonders sinnvolle und für die Praxis taugliche Gestaltung der Insektenfalle kann jedoch vorsehen, dass der spitze Öffnungswinkel zwischen der Außenwandung der Insektenfalle sowie der Mittelachse des Ansaugkanals zwischen etwa fünfzehn Winkelgraden und etwa sechzig Winkelgraden beträgt. Ggf. kann es sinnvoll sein, den spitzen Öffnungswinkel zwischen der Außenwandung der Insektenfalle und der Mittelachse des Ansaugkanals auf einen Bereich zwischen etwa zwanzig Winkelgraden und etwa fünfundvierzig Winkelgraden zu begrenzen.

Die Außenwandung der Insektenfalle zwischen einem den Ansaugkanal in Nähe der Ansaugöffnung umschließenden Bereich und einem Übergangsbereich zur Stirn- oder Bodenseite kann in einer ersten Ausführungsvariante eine kegelförmige Kontur aufweisen, wobei die Bodenseite zylindrisch ist. Ebenso denkbar sind jedoch Varianten mit nicht kegelförmiger Kontur, wobei die Außenwandung der Insektenfalle zwischen einem den Ansaugkanal in Nähe der Ansaugöffnung umschließenden Bereich und einem Übergangsbereich zur Stirn- oder Bodenseite etwa eine pyramidale Kontur mit mindestens drei Pyramidenflachseiten aufweisen kann. Weitere Abwandlungen sind denkbar und sinnvoll, so dass bspw. die Außenwandung der Insektenfalle zwischen einem den Ansaugkanal in Nähe der Ansaugöffnung umschließenden Bereich und einem Übergangsbereich zur Stirn- oder Bodenseite wahlweise eine ebene Kontur oder eine gewölbte Kontur aufweisen kann. Kombinationen sind möglich, so etwa Übergänge von einer ebenen in eine gewölbte Kontur oder umgekehrt. Auch eine ovalkegelige Kontur mit ovaler Bodenfläche und sich daran anschließender Außenwandung mit entsprechender Formgebung wäre bspw. denkbar.

Eine besonders bevorzugte Variante der erfindungsgemäßen Insektenfalle sieht einen Kragen an der Stirn- oder Bodenseite vor, welcher in etwa der Kontur der Außenwandung folgt. Dieser Kragen der Stirn- oder Bodenseite, der sich von der ebenen oder leicht konvex nach außen oder unten gewölbten Stirn- oder Bodenseite als zylindrischer oder kegelförmiger oder anderweitig entsprechend der Außenwandung konturierter Abschnitt nach oben fortsetzt, kann bspw. eine Höhe aufweisen, die sinnvollerweise zwischen fünf und zehn Prozent der Gesamthöhe der Außenwandung betragen kann. So kann der Kragen je nach Dimensionierung der Insektenfalle eine Höhe zwischen ca. zwei und ca. zwanzig Zentimeter aufweisen. Dieser Kragen sorgt in vorteilhafter Weise dafür, dass die durch den Ansaugkanal strömende Ansaugluft im Inneren der Falle in gewünschter Weise verwirbelt und weitgehend gleichmäßig über die gesamte Höhe der sich nach oben zur Mündung der Ansaugöffnung hin verjüngenden netzartigen Außenwandung umgelenkt wird und dort ausströmen kann. Ohne einen solchen Kragen könnte insbesondere der unerwünschte Effekt auftreten, dass ein Großteil der an der Bodenfläche umgelenkten Ansaugluftströmung unmittelbar im unteren breiteren Bereich der Außenwandung austreten würde, während in die oberen Bereiche der Außenwandung nur noch Reste der Luftströmung gelangen könnten, was hinsichtlich der anzustrebenden gleichmäßigen schwachen und aufwärtsgerichteten Luftströmung, die über die gesamte luftdurchlässige Außenwandung der Falle ausströmen und dadurch für die anzulockenden Insekten die Illusion eines menschlichen oder tierischen Körpers mit seinen schwachen aufsteigenden Konvektionsströmungen bilden soll, sehr ungünstig wäre.

Die von der Außenwandung der Insektenfalle emittierte schwache Luftströmung kann ggf. durch chemische Lockstoffanteile angereichert werden, die von der Falle emittiert und mit der Ansaugluft vermischt werden, so dass sie über die Außenwandung abgegeben werden. Eine Quelle für einen solchen Lockstoff oder für ein Lockstoffgemisch kann sich bspw. im Inneren und/oder an der Außenwand der Falle befinden, wobei die Quelle vorzugsweise mittels geeigneter Dosierungseinrichtungen dafür sorgt, dass gleichmäßige Mengen von Lockstoff abgegeben und der durch die Außenwandung ausströmenden Luft hinzugemischt werden.

Eine solche Insektenfalle kann bspw. eine Gesamthöhe von ca. zehn bis etwa hundert Zentimeter oder ggf. auch mehr aufweisen, wobei der Ansaugkanal einen typischen Durchmesser von ca. drei bis etwa fünfzehn oder zwanzig Zentimeter und die Stirn- oder Bodenseite einen Durchmesser von etwa zehn bis ca. hundert Zentimeter (wahlweise auch etwas mehr) aufweisen kann.

Weiterhin kann bei der erfindungsgemäßen Insektenfalle vorgesehen sein, dass eine die Ansaugöffnung passierende und durch eine Saugströmung erzeugte Luftströmung eine Luftgeschwindigkeit in einer Größenordnung von etwa einem Meter bis etwa zehn Metern pro Sekunde aufweist. Besonders bevorzugt kann eine die Ansaugöffnung passierende und durch eine Saugströmung erzeugte Luftströmung eine Luftgeschwindigkeit in einer Größenordnung von etwa zwei bis sechs Metern pro Sekunde, insbesondere etwa vier Meter pro Sekunde aufweisen. Die Ansaugluftströmung weist eine Luftgeschwindigkeit auf, die es den angelockten Insekten nach Möglichkeit deutlich erschwert, in der Nähe der Ansaugöffnung zu entfliehen. Vielmehr sollen sie mit Hilfe der ausreichend starken Ansaugluftströmung in das Innere der Falle eingesaugt und dort am Zurückfliegen aus dem Falleninnenraum zuverlässig gehindert werden. Innerhalb des Ansaugkanals kann mindestens ein die Luftströmung erzeugender Ventilator angeordnet sein.

Weiterhin kann eine die für Luft durchlässige Struktur der Außenwandung passierende und die Insektenfalle nach außen durchdringende Luftströmung eine Luftgeschwindigkeit in einer Größenordnung von etwa 0,02 bis etwa einem Meter pro Sekunde aufweisen, wobei auch hier wieder eine besonders zu bevorzugende Variante vorsieht, dass eine die für Luft durchlässige Struktur der Außenwandung passierende und die Insektenfalle nach außen durchdringende Luftströmung eine Luftgeschwindigkeit in einer Größenordnung von etwa 0,05 bis 0,6 Meter pro Sekunde aufweisen kann. Der Luftvolumenstrom der ausströmenden Luft ist naturgemäß vom Volumenstrom der Ansaugluft abhängig, so dass die Luftgeschwindigkeit durch Abstimmung der Kanalgrößen, der Netzweiten, der Drehzahl des eingesetzten Ventilators und der Verhältnisse der Fläche der Außenwandung zu den übrigen Dimensionen der Luftkanäle einstellbar ist. Wie oben bereits erwähnt, bildet die schwache Luftströmung, die aus der gesamten Außenwandung möglichst gleichmäßig ausströmt, einen für viele Fluginsekten attraktiven Lockreiz, da alleine die Luftströmung - schon ohne Anreicherung mit irgendwelchen chemischen Lockstoffen - eine für die Insekten deutlich wahrnehmbare Illusion eines menschlichen oder tierischen Körpers mit den für diese Körper typischen schwachen Konvektionsluftbewegungen liefert. Aus diesem Grund sind die angegebenen Strömungsgeschwindigkeiten anzustreben, da insbesondere bei den angegebenen Größenordnungen für die großflächig ausströmenden Luftbewegungen (ca. 0,05 ... 0,6 m/s) diese Lockwirkung für die Insekten entsteht.

Unterstützt werden kann diese wahrnehmbare Lockwirkung durch optische Lockreize, bspw. durch Helligkeitsunterschiede, Farbwirkungen oder unterschiedliche Hell-Dunkel-Kontraste, die sich an der Falle befinden. So kann als weitere Option der Insektenfalle ein für die einzufangenden Insekten wahrnehmbar optischer Lockreiz dadurch geschaffen werden, dass eine Kontrastwirkung an den Außenflächen geschaffen wird. So kann insbesondere vorgesehen sein, dass die Netzstruktur der Außenwandung der Insektenfalle relativ hell ist, während etwa die Umgebung der Ansaugöffnung relativ dunkel ausgebildet ist, bspw. durch einen dunklen oder schwarzen Ring, der den oberen Abschnitt des Ansaugkanals bildet, an dem sich auch die Ansaugöffnung befindet. Auch das Innere der Ansaugöffnung kann ggf. dunkel oder schwarz ausgestaltet sein, während sich der unterhalb des dunklen oder schwarzen Ringes nach unten fortsetzende Abschnitt der netzartigen Außenfläche durch die hellere Kontrastwirkung deutlich davon abhebt. Die Wirkung auf die Insekten kann insbesondere dergestalt sein, dass sie die dunklen Stellen als attraktiver wahrnehmen, insbesondere vor den die dunklen Stellen hervorhebenden helleren Bereichen der Außenwandung, was auf viele Insekten anziehend wirkt.

Weiterhin kann es von Vorteil sein, wenn eine Stirnseite des Ansaugkanals im Innenraum der Insektenfalle einen Abstand zur Stirn- oder Bodenfläche aufweist, der in etwa der Höhe des Kragens der Stirn- oder Bodenseite entspricht. Der optimale Abstand ist durch Versuche zu ermitteln, wobei ein wichtiges Kriterium für einen günstigen Abstand die optimierte Luftverteilung innerhalb der Falle sein kann, die zu einer möglichst gleichmäßen Ausströmung der Luft über die gesamte Außenwandung führt.

Außerdem kann die Insektenfalle im Innenraum mindestens eine Einrichtung zum Festhalten, Fixieren und/oder Abtöten der den Ansaugkanal passierten und im Innenraum der Falle befindlichen Insekten aufweisen.

Darüber hinaus kann die erfindungsgemäße Insektenfalle optional mit einer Einrichtung und/oder elektronischen Sensorik zur Erfassung der gefangenen Insekten ausgestattet sein. Diese Einrichtung kann bspw. am Boden unterhalb der unteren Stirnseite des Ansaugkanals oder auch im Ansaugkanal selbst angeordnet sein, so dass eine zuverlässige Erfassung aller den Ansaugkanal passierenden Insekten ermöglicht ist.

Die erfindungsgemäße Falle eignet sich zum Anlocken und Fangen zahlreicher unterschiedlicher Insektenarten, insbesondere von Fluginsekten wie Moskitos, Gelbfiebermücken, Zika-Mücken oder anderen als für den Menschen potentiell gefährlichen, weil Krankheiten übertragenden Insektenarten.

Die vorliegende Erfindung umfasst neben der in zahlreichen Ausführungs- und Ausstattungsvarianten beschriebenen Insektenfalle ein Verfahren zum Anlocken und/oder Fangen von Flug- und/oder Schädlingsinsekten, die mittels einer schwachen Luftströmung angelockt werden, die von einer für Luft durchlässigen, aber für Insekten nicht durchlässigen Oberfläche einer Insektenfalle emittiert wird, wobei die Insekten auf dem Weg in einen Innenraum der Insektenfalle eine Ansaugöffnung passieren, die sich in einen Ansaugkanal fortsetzt, in dem eine die Ansaugöffnung mit Unterdruck bzw. mit einer Saugströmung beaufschlagende Luftströmung herrscht, die zum Innenraum der Insektenfalle führt. Diese Insektenfalle kann insbesondere gemäß einer der zuvor beschriebenen Ausführungsvarianten ausgebildet sein.

Es sei an dieser Stelle ausdrücklich erwähnt, dass alle Aspekte und Ausführungsvarianten, die im Zusammenhang mit der erfindungsgemäßen Insektenfalle erläutert wurden, gleichermaßen Teilaspekte des erfindungsgemäßen Verfahrens zum Anlocken und/oder Fangen von Insekten betreffen oder sein können. Wenn daher an einer Stelle bei der Beschreibung oder auch bei den Anspruchsdefinitionen zur erfindungsgemäßen Insektenfalle von bestimmten Aspekten und/oder Zusammenhängen und/oder Wirkungen die Rede ist, so gilt dies gleichermaßen für das erfindungsgemäße Verfahren. In umgekehrter Weise gilt dasselbe, so dass auch alle Aspekte und Ausführungsvarianten, die im Zusammenhang mit dem erfindungsgemäßen Verfahren erläutert wurden, gleichermaßen Teilaspekte der erfindungsgemäßen Insektenfalle betreffen oder sein können. Wenn daher an einer Stelle bei der Beschreibung oder auch bei den Anspruchsdefinitionen zum erfindungsgemäßen Verfahren von bestimmten Aspekten und/oder Zusammenhängen und/oder Wirkungen die Rede ist, so gilt dies gleichermaßen für die erfindungsgemäße Insektenfalle.

Im Folgenden soll ein Ausführungsbeispiel die Erfindung und ihre Vorteile anhand der beigefügten einzigen Figur näher erläutern. Die Größenverhältnisse der einzelnen Elemente zueinander in der Figur entsprechen nicht immer den realen Größenverhältnissen, da einige Formen vereinfacht und andere Formen zur besseren Veranschaulichung vergrößert im Verhältnis zu anderen Elementen dargestellt sind.

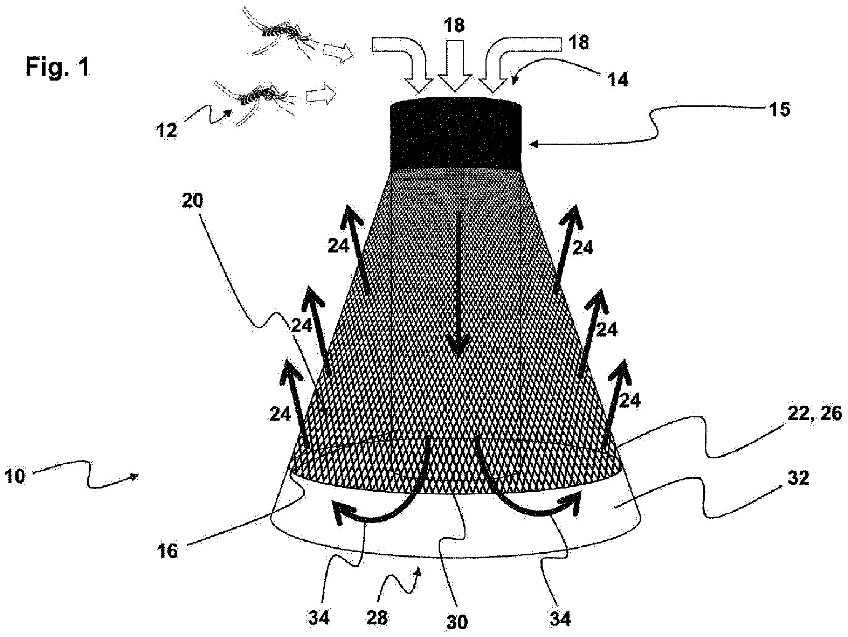

Fig. 1 zeigt eine schematische Darstellung einer Ausführungsvariante einer erfindungsgemäßen Insektenfalle.

Der Übersicht halber sind nur solche Bezugszeichen in der einzigen Figur dargestellt, die für die Beschreibung erforderlich sind. Die dargestellte Ausführungsform stellt lediglich ein Beispiel dar, wie die erfindungsgemäße Insektenfalle ausgestaltet sein kann, soll jedoch nicht als abschließende Begrenzung aufgefasst werden.

Die schematische Darstellung der Fig. 1 zeigt die wesentlichen Prinzipien einer möglichen Ausführungsvariante einer erfindungsgemäßen Insektenfalle 10, die insbesondere dem Anlocken und/oder Fangen von Flug- und/oder Schädlingsinsekten 12 wie etwa von Moskitos, Gelbfiebermücken, Zika-Mücken, Tigermücken etc. dienen kann.

Die in der einzigen Fig. 1 in schematischer Weise gezeigte Insektenfalle 10 weist eine obere kreisrunde Ansaugöffnung 14 auf, die sich in einen vertikal nach unten führenden zylindrischen Ansaugkanal 16 fortsetzt, in dem eine die Ansaugöffnung 14 mit Unterdruck bzw. mit einer Saugströmung 18 beaufschlagende Luftströmung herrscht, die zu einem Innenraum 20 der Insektenfalle 10 bzw. dort hinein führt. Außerdem ist die Insektenfalle 10 mit einer kegelstumpfförmigen Außenwandung 22 ausgestattet, die eine für ausströmende Luft 24 zumindest teilweise durchlässige Oberfläche aufweist, insbesondere gebildet durch eine netzartige Struktur 26, deren Maschenweite groß genug ist, dass eine ausreichende Luftströmung 24 dort hindurchpassieren kann, deren Maschenweite jedoch zuverlässig ein Entweichen der im Innenraum 20 der Falle 10 gefangenen Insekten 12 verhindert.

Wie es die Fig. 1 erkennen lässt, umschließt die Außenwandung 22 den Ansaugkanal 16 in Nähe der Ansaugöffnung 14 und umhüllt den Ansaugkanal 16 im sich nach unten fortsetzenden weiteren Bereich in sich änderndem radialen Abstand, so dass sich die Außenwandung 22 nach unten hin kegelförmig aufweitet. Außerdem ist die Insektenfalle 10 mit einer sich an die Außenwand 22 anschließenden und weitgehend für ein- oder ausströmende Luft undurchlässigen und der Ansaugöffnung 14 gegenüberliegenden Stirn- oder Bodenseite 28 ausgestattet, die beabstandet ist von einer in den Innenraum 20 der Insektenfalle 10 reichenden offenen unteren Stirnseite 30 des Ansaugkanals 16. Die Bodenseite 28 ist im gezeigten Ausführungsbeispiel der Insektenfalle 10 eben und zylindrisch geformt, so dass sie senkrecht zur Längsachse des Ansaugkanals 16 ausgerichtet ist.

Innerhalb des Ansaugkanals 16 kann mindestens ein die Luftströmung 18 erzeugender Ventilator (nicht gezeigt) angeordnet sein. Die den Ansaugkanal 18 durchstreichende Luftströmung 18 kann eine durch diesen Ventilator erzeugte Luftgeschwindigkeit in einer Größenordnung von etwa 1,0 bis 10 m/s aufweisen. Besonders bevorzugt kann eine die Ansaugöffnung 14 und den Ansaugkanal 16 passierende und durch eine Saugströmung erzeugte Luftströmung 18 eine Luftgeschwindigkeit in einer Größenordnung von etwa 2,0 bis etwa 6,0 m/s, insbesondere etwa 4 m/s aufweisen. Die Ansaugluftströmung 18 weist somit eine Luftgeschwindigkeit auf, die es den angelockten Insekten 12 nach Möglichkeit deutlich erschwert, in der Nähe der Ansaugöffnung 14 zu entfliehen. Vielmehr sollen sie mit Hilfe der ausreichend starken Ansaugluftströmung 18 in das Innere 20 der Falle 10 eingesaugt und dort am Zurückfliegen aus dem Falleninnenraum 20 zuverlässig gehindert werden. Innerhalb der Falle 10 können geeignete Mittel zum Festhalten oder Abtöten der gefangenen Insekten 12 angeordnet sein, die hier jedoch nicht dargestellt sind.

Die durch die Außenwandung 22 hindurchpassierende und die Insektenfalle 10 nach außen durchdringende Luftströmung 24 kann vorzugsweise eine Luftgeschwindigkeit in einer Größenordnung von etwa 0,02 bis etwa 1,0 m/s aufweisen, wobei auch hier wieder eine besonders zu bevorzugende Variante vorsieht, dass eine die für Luft durchlässige Struktur 26 der Außenwandung 22 passierende und die Insektenfalle 10 nach außen durchdringende Luftströmung 24 eine Luftgeschwindigkeit in einer Größenordnung von etwa 0,05 bis etwa 0,6 m/s aufweisen kann. Der Luftvolumenstrom der ausströmenden Luft 24 ist naturgemäß vom Volumenstrom der Ansaugluft 18 abhängig, so dass die Luftgeschwindigkeit durch Abstimmung der Kanalgrößen, der Netzweiten, der Drehzahl des eingesetzten Ventilators und der Verhältnisse der Fläche der Außenwandung 22 zu den übrigen Dimensionen der Luftkanäle vorgegeben werden kann.

Diese anzustrebenden Luftgeschwindigkeiten der möglichst gleichmäßig aus der gesamten Außenwandung 22 austretenden Luftströmung 24 (ca. 0,05 ... 0,6 m/s) sind abgestimmt auf typische Wahrnehmungen von anzulockenden Fluginsekten, die solche Luftströmungen mit schwachen Konvektionsströmungen assoziieren oder verwechseln, wie sie besonders von lebenden Wirtsorganismen emittiert werden, die zu den bevorzugten Zielen dieser Insekten zählen. Deutlich schnellere Luftgeschwindigkeiten werden von den Insekten 12 deshalb nicht mehr als gleichermaßen attraktive Lockreize wahrgenommen, da sie nicht mehr mit den typischen Wirtsorganismen assoziiert werden können. Die von der Außenwandung 22 der Insektenfalle 10 emittierte schwache Luftströmung 24 kann wahlweise durch chemische Lockstoffanteile angereichert werden, die von der Falle 10 emittiert und mit der Ansaugluft 18 vermischt werden, so dass sie über die Außenwandung 22 abgegeben werden.

Wie es die Fig. 1 verdeutlicht, weitet sich die Außenwandung 22 der Insektenfalle 10, ausgehend von einem den Ansaugkanal 16 in Nähe der Ansaugöffnung 14 umschließenden oberen Bereich (unterhalb des dunklen Rings 15) in Richtung zur Stirn- oder Bodenseite 28 unter Einschluss eines spitzen Öffnungswinkels zur Mittelachse des Ansaugkanals 16. Dieser spitze Öffnungswinkel zwischen der Außenwandung 22 der Insektenfalle 10 sowie der Mittelachse des Ansaugkanals 16 kann grundsätzlich in weiten Grenzen variieren und beispielsweise zwischen etwa 10° und ca. 60° betragen. Die hier gezeigte und für die Praxis taugliche Gestaltung der Insektenfalle 10 sieht jedoch vor, dass der spitze Öffnungswinkel zwischen der Außenwandung 22 der Insektenfalle 10 und der Mittelachse des Ansaugkanals 16 zwischen etwa 20° und 30° - ggf. auch bis etwa 45° - beträgt. Zudem weist die Außenwandung 22 insgesamt eine kegelstumpfförmige Kontur auf.

Weiterhin wichtig für eine einwandfreie Funktion der erfindungsgemäßen Insektenfalle 10 ist ein Kragen 32 an der Stirn- oder Bodenseite 28, der in etwa der Kontur und dem Schrägungswinkel der Außenwandung 22 folgt. Der Kragen 32 der ansonsten ebenen und kreisrunden Stirn- oder Bodenseite 28, der sich nach oben erstreckt und in die für Luft 24 durchlässige Außenwandung 22 fortsetzt, kann bspw. eine Höhe aufweisen, die sinnvollerweise zwischen 5% und etwa 15% der Gesamthöhe der Außenwandung 22 entsprechen kann. So kann der Kragen 32 je nach Dimensionierung der Insektenfalle 10 eine Höhe zwischen ca. 2 und ca. 20 cm aufweisen. Der Kragen 32 sorgt in vorteilhafter Weise dafür, dass die durch den Ansaugkanal 16 strömende und an seiner unteren stirnseitigen Öffnung 30 austretende Ansaugluft 18 im Inneren 20 der Falle 10 als umgelenkte Luftströmung 34 in gewünschter Weise verwirbelt und weitgehend gleichmäßig über die gesamte Höhe der sich nach oben zur Mündung der Ansaugöffnung 14 hin verjüngenden netzartigen Außenwandung 22 ausströmt. Ohne den gezeigten Kragen 32 könnte der unerwünschte Effekt entstehen, dass ein Großteil der an der Bodenfläche 28 umgelenkten Ansaugluftströmung 18 unmittelbar als ausströmende Luft 24 im unteren breiteren Bereich der Außenwandung 22 austreten würde, während in die oberen Bereiche der Außenwandung 22 nur noch Reste der Luftströmung 24 gelangen könnten, was hinsichtlich der anzustrebenden gleichmäßigen schwachen Luftströmung 24, die über die gesamte luftdurchlässige Außenwandung 22 der Falle 10 ausströmen und dadurch für die anzulockenden Insekten 12 die Illusion eines menschlichen oder tierischen Körpers mit seinen schwachen Konvektionsströmungen bilden soll, sehr ungünstig wäre.

Die Insektenfalle 10 kann bspw. eine Gesamthöhe von ca. 10 bis 100 cm oder auch mehr aufweisen, wobei der Ansaugkanal 16 einen Durchmesser von ca. 3 bis 15 cm und die Stirn- oder Bodenseite 28 einen Durchmesser von etwa 10 bis ca. 100 cm aufweisen kann. Allerdings sind auch andere Abmessungen möglich.

Weiterhin kann es von Vorteil sein, wenn eine Stirnseite 30 des Ansaugkanals 16 im Innenraum 20 der Insektenfalle 10 einen Abstand zur Stirn- oder Bodenfläche 28 aufweist, der in etwa der Höhe des Kragens 32 der Stirn- oder Bodenseite 28 entspricht. Der optimale Abstand ist durch Versuche zu ermitteln, wobei ein wichtiges Kriterium für einen günstigen Abstand die optimierte Luftverteilung innerhalb der Falle 10 sein kann, die zu einer möglichst gleichmäßen Ausströmung der Luft 24 über die gesamte Außenwandung 22 führt.

Die Insektenfalle 10 kann hängend oder stehend montierbar sein, so dass die Ansaugöffnung 14 nach oben gerichtet ist und der Ansaugkanal 16 in etwa vertikaler Richtung verläuft, und wobei die Stirn- oder Bodenseite 28 einen unteren horizontalen Abschluss der Falle 10 bildet.

Als weitere Option der Insektenfalle 10 kann ein für die einzufangenden Insekten 12 wahrnehmbar optischer Lockreiz dadurch geschaffen werden, dass eine deutlich wahrnehmbare Kontrastwirkung an den Außenflächen der Falle 10 geschaffen ist. So lässt die Fig. 1 erkennen, dass die Netzstruktur 26 der Außenwandung 22 der Insektenfalle 10 relativ hell ist, während die Umgebung der Ansaugöffnung 14 relativ dunkel ausgebildet ist, hier gebildet durch einen dunklen oder schwarzen Ring 15, der den oberen Abschnitt des Ansaugkanals 16 bildet, an dem sich auch die Ansaugöffnung 14 befindet. Auch das Innere der Ansaugöffnung 14 kann ggf. dunkel oder schwarz ausgestaltet sein, während sich der unterhalb des dunklen oder schwarzen Ringes 15 nach unten fortsetzende Abschnitt der netzartigen Außenfläche 22 durch die hellere Kontrastwirkung deutlich davon abhebt. Die Wirkung auf die Insekten 12 kann insbesondere dergestalt sein, dass sie die dunklen Stellen (den Ring 15 sowie die Innenseite des oberen Abschnittes des Ansaugkanals 16) als attraktiver wahrnehmen, insbesondere vor den die dunklen Stellen hervorhebenden helleren Bereichen der Außenwandung 22.

Darüber hinaus kann die erfindungsgemäße Insektenfalle 10 optional mit einer hier nicht gezeigten Einrichtung und/oder elektronischen Sensorik zur Erfassung der gefangenen Insekten ausgestattet sein.

Die Erfindung wurde unter Bezugnahme auf eine bevorzugte Ausführungsform beschrieben. Es ist jedoch für einen Fachmann vorstellbar, dass Abwandlungen oder Änderungen der Erfindung gemacht werden können, ohne dabei den Schutzbereich der nachstehenden Ansprüche zu verlassen.

### Bezugszeichenliste

10 Falle, Insektenfalle
12 Insekten, Fluginsekten
14 Ansaugöffnung
15 dunkler Ring, schwarzer Ring
16 Ansaugkanal
18 Ansaugluftströmung
20 Innenraum, Falleninnenraum
22 Außenwandung
24 schwache Luftströmung, ausströmende Luft
26 netzartige Struktur
28 Stirn- oder Bodenfläche
30 Stirnseite (des Ansaugkanals)
32 Kragen
34 umgelenkte Luftströmung

## Patentansprüche

1. Insektenfalle (10), insbesondere zum Anlocken und/oder Fangen von Flug- und/oder Schädlingsinsekten (12),
- mit einer Ansaugöffnung (14), die sich in einen Ansaugkanal (16) fortsetzt, in dem eine die Ansaugöffnung (14) mit Unterdruck bzw. mit einer Saugströmung beaufschlagende Luftströmung (18) herrscht, die zu einem Innenraum (20) der Insektenfalle (10) führt,
- mit einer den Ansaugkanal (16) in Nähe der Ansaugöffnung (14) umschließenden und den Ansaugkanal (16) im weiteren Bereich in sich änderndem radialen Abstand umhüllenden sowie sich in einer zur Richtung der den Ansaugkanal (16) durchstreichenden Luftströmung (18) parallelen Richtung weitenden, für ausströmende Luft (24) zumindest teilweise durchlässige Oberfläche, die zumindest einen Teil einer Außenwandung (22) der Insektenfalle (10) bildet,
- und mit einer sich an die Außenwand (22) anschließenden weitgehend für ein- oder ausströmende Luft undurchlässigen und der Ansaugöffnung (14) gegenüberliegenden Stirn- oder Bodenseite (28), die zumindest geringfügig beabstandet ist zu einer in den Innenraum (20) der Falle (10) reichenden offenen Stirnseite (30) des Ansaugkanals (16),
- wobei sich die Außenwandung (22) der Insektenfalle (10), ausgehend von einem den Ansaugkanal (16) in Nähe der Ansaugöffnung (14) umschließenden Bereich in Richtung zur Stirn- oder Bodenseite (28) unter Einschluss eines spitzen Öffnungswinkels zur Mittelachse des Ansaugkanals (16) öffnet bzw. weitet.

2. Insektenfalle (10) nach Anspruch 1, deren für ausströmende Luft (24) zumindest teilweise durchlässige Oberfläche, die einen Teil der Außenwandung (22) der Insektenfalle (10) bildet, eine netzartige Struktur (26) aufweist.

3. Insektenfalle (10) nach Anspruch 1 oder 2, deren Stirn- oder Bodenseite (28) durch eine für Luft annähernd undurchlässige Struktur bzw. durch ein für Luft annähernd undurchlässiges Material gebildet ist.

4. Insektenfalle (10) nach einem der Ansprüche 1 bis 3, bei welcher der spitze Öffnungswinkel zwischen der Außenwandung (22) der Insektenfalle (10) sowie der Mittelachse des Ansaugkanals (16) zwischen etwa zehn Winkelgraden und etwa sechzig Winkelgraden, vorzugsweise zwischen etwa zwanzig Winkelgraden und etwa fünfundvierzig Winkelgraden, beträgt.

5. Insektenfalle nach einem der Ansprüche 1 bis 4, deren Außenwandung (22) zwischen einem den Ansaugkanal (16) in Nähe der Ansaugöffnung (14) umschließenden Bereich und einem Übergangsbereich zur Stirn- oder Bodenseite (28) eine kegelförmige Kontur oder eine pyramidale Kontur mit mindestens drei Pyramidenflachseiten oder eine gewölbte Kontur aufweist.

6. Insektenfalle (10) nach einem der Ansprüche 1 bis 5, bei welcher die Stirn- oder Bodenseite (28) einen Kragen (32) aufweist, welcher in etwa der Kontur der Außenwandung (22) folgt.

7. Insektenfalle (10) nach Anspruch 6, bei welcher der Kragen (32) der Stirn- oder Bodenseite (28) eine Höhe aufweist, die zwischen fünf und zehn Prozent der Gesamthöhe der Außenwandung (22) entspricht, wobei die Höhe des Kragens (32) vorzugsweise zwischen ca. zwei und zwanzig Zentimeter aufweisen kann.

8. Insektenfalle (10) nach einem der Ansprüche 1 bis 7, die eine Gesamthöhe von ca. zehn bis etwa hundert Zentimeter aufweisen kann, wobei der Ansaugkanal (16) einen Durchmesser von ca. drei bis etwa fünfzehn Zentimeter und die Stirn- oder Bodenseite (28) einen Durchmesser von etwa zehn bis ca. hundert Zentimeter aufweisen kann.

9. Insektenfalle (10) nach einem der Ansprüche 1 bis 8, bei der eine die Ansaugöffnung (14) passierende und durch eine Saugströmung erzeugte Luftströmung (18) eine Luftgeschwindigkeit in einer Größenordnung von etwa einem Meter bis etwa zehn Metern pro Sekunde, vorzugsweise von etwa zwei bis sechs Metern pro Sekunde, insbesondere von etwa vier Metern pro Sekunde, aufweist.

10. Insektenfalle (10) nach einem der Ansprüche 1 bis 9, bei der eine die für Luft durchlässige Struktur (26) der Außenwandung (22) passierende und die Insektenfalle (10) nach außen durchdringende Luftströmung (24) eine Luftgeschwindigkeit in einer Größenordnung von etwa 0,02 bis 1,0 Meter pro Sekunde, vorzugsweise in einer Größenordnung von etwa 0,05 bis 0,6 Meter pro Sekunde, aufweist.

11. Insektenfalle (10) nach einem der Ansprüche 1 bis 10, bei der innerhalb des Ansaugkanals (16) mindestens ein die Luftströmung (18) erzeugender Ventilator angeordnet ist.

12. Insektenfalle (10) nach einem der Ansprüche 1 bis 11, bei der eine Stirnseite (30) des Ansaugkanals (16) im Innenraum (20) der Insektenfalle (10) einen Abstand zur Stirn- oder Bodenfläche (28) aufweist, der in etwa der Höhe des Kragens (32) der Stirn- oder Bodenseite (28) entspricht.

13. Insektenfalle (10) nach einem der Ansprüche 1 bis 12, die hängend oder stehend montierbar ist, wobei die Ansaugöffnung (14) nach oben gerichtet ist, wobei der Ansaugkanal (16) in etwa vertikaler Richtung verläuft, und wobei die Stirn- oder Bodenseite (28) einen unteren horizontalen Abschluss bildet.

14. Insektenfalle (10) nach einem der Ansprüche 1 bis 13, die im Innenraum (20) mindestens eine Einrichtung zum Festhalten, Fixieren und/oder Abtöten der den Ansaugkanal (16) passierten und im Innenraum (20) der Falle (10) befindlichen Insekten (12) aufweist, welche optional mit einer Einrichtung und/oder elektronischen Sensorik zur Erfassung der gefangenen Insekten (12) ausgestattet ist.

15. Verfahren zum Anlocken und/oder Fangen von Flug- und/oder Schädlingsinsekten (12) vermittels einer gemäß einem der Ansprüche 1 bis 14 ausgebildet Insektenfalle (10), wobei die Flug- und/oder Schädlingsinsekten (12) mittels einer schwachen Luftströmung (24) angelockt werden, die von einer für Luft durchlässigen, aber für Insekten (12) nicht durchlässigen Oberfläche einer Insektenfalle (10) emittiert wird, wobei die Insekten (12) auf dem Weg in einen Innenraum (20) der Insektenfalle (10) eine Ansaugöffnung (14) passieren, die sich in einen Ansaugkanal (16) fortsetzt, in dem eine die Ansaugöffnung (14) mit Unterdruck bzw. mit einer Saugströmung beaufschlagende Luftströmung (18) herrscht, die zum Innenraum (20) der Insektenfalle (10) führt,
welche für ausströmende Luft (24) zumindest teilweise durchlässige Oberfläche zumindest einen Teil einer Außenwandung (22) der Insektenfalle (10) bildet und sich um den Ansaugkanal (16) in Nähe der Ansaugöffnung (14) umschließt und den Ansaugkanal (16) im weiteren Bereich in sich änderndem radialen Abstand umhüllt sowie sich in einer zur Richtung der den Ansaugkanal (16) durchstreichenden Luftströmung (18) parallelen Richtung weitet;
- und mit einer sich an die Außenwand (22) anschließenden weitgehend für ein- oder ausströmende Luft undurchlässigen und der Ansaugöffnung (14) gegenüberliegenden Stirn- oder Bodenseite (28), die zumindest geringfügig beabstandet ist zu einer in den Innenraum (20) der Falle (10) reichenden offenen Stirnseite (30) des Ansaugkanals (16),
- wobei sich die Außenwandung (22) der Insektenfalle (10), ausgehend von einem den Ansaugkanal (16) in Nähe der Ansaugöffnung (14) umschließenden Bereich in Richtung zur Stirn- oder Bodenseite (28) unter Einschluss eines spitzen Öffnungswinkels zur Mittelachse des Ansaugkanals (16) öffnet bzw. weitet.

## Claims

1. An insect trap (10), especially for attracting and/or capturing flying insects and/or pest insects (12),
- with a suction opening (14) that continues into a suction duct (16), in which suction duct (16) an air flow (18) prevails, which air flow (18) leads to an interior space (20) of the insect trap (10) and which impinges the suction opening (14) with negative pressure or with a suction current, as the case may be,
- having a surface which surrounds the suction duct (16) in the vicinity of the suction opening (14), the surface surrounding the suction duct (16) in the further region at a varying radial distance, thereby widening in a direction parallel to the direction of the air flow (18) passing through the suction duct (16) and which surface is at least partially permeable to outflowing air (24) and forms at least part of an outer wall (22) of the insect trap (10),
- and with a front side or bottom side (28), which adjoins the outer wall (22) and which is largely impermeable to incoming or outflowing air and which is located opposite the suction opening (14), which front side or bottom side (28) is at least slightly spaced apart from an open front side (30) of the suction duct (16), which open front side (30) is extending into the interior space (20) of the trap (10),
- wherein the outer wall (22) opens or widens starting from a region enclosing the suction duct (16) in the vicinity of the suction opening (14) and extending in the direction of the front side or bottom side (28), thereby enclosing an acute opening angle to the central axis of the suction duct (16).

2. The insect trap (10) according to claim 1, wherein the surface, which is at least partially permeable to outflowing air (24) and which forms a part of the outer wall (22) of the insect trap (10), has a net-like structure (26).

3. The insect (10) trap according to claim 1 or 2, the front side or bottom side (28) of which is formed by a structure that is approximately impermeable to air, or by a material that is approximately impermeable to air.

4. The insect trap (10) according to one of the claims 1 to 3, in which the acute opening angle between the outer wall (22) of the insect trap (10) and the central axis of the suction duct (16) is between about ten angular degrees and about sixty angular degrees, preferably between about twenty angular degrees and about forty-five angular degrees.

5. The insect trap (10) according to one of the claims 1 to 4, the outer wall (22) of which has a cone shaped contour or a pyramidal contour with at least three pyramidal flat sides or a curved contour between a region enclosing the suction duct (16) in the vicinity of the suction opening (14) and a transition region to the front side or bottom side (28).

6. The insect trap (10) according to one of the claims 1 to 5, in which the front side or bottom side (28) has a collar (32), which collar (32) approximately follows the contour of the outer wall (22).

7. The insect trap (10) according to claim 6, in which the collar (32) of the front side or bottom side (28) has a height which corresponds to between five percent and ten percent of the total height of the outer wall (22), wherein the collar (32) has a height between approximately two centimeters and twenty centimeters.

8. The insect trap (10) according to one of the claims 1 to 7, which may have a total height of about ten centimeters to about one hundred centimeters, wherein the suction duct (16) may have a diameter of about three centimeters to about fifteen centimeters, and wherein the front side or bottom side (28) may have a diameter of about ten centimeters to about one hundred centimeters.

9. The insect trap (10) according to one of the claims 1 to 8, in which an air flow (18) passing through the suction opening (14) and being generated by a suction flow has an air velocity in the range of about one meter per second to about ten meters per second, preferably of about two meters per second to about six meters per second, in particular of about four meters per second.

10. The insect trap (10) according to one of the claims 1 to 9, in which an air flow (24) passing through the air-permeable structure (26) of the outer wall (22) and penetrating the insect trap (10) to the outside has an air velocity of the order of about 0.02 meters per second to 1.0 meters per second, preferably in the order of about 0.05 meters per second to 0.6 meters per second.

11. The insect trap (10) according to one of the claims 1 to 10, in which at least one fan generating the air flow (18) is arranged within the suction duct (16).

12. The insect trap (10) according to one of the claims 1 to 11, in which a front side (30) of the suction duct (16) within the interior space (20) of the insect trap (10) has a distance to the front surface or bottom surface (28) which corresponds approximately to the height of the collar (32) of the front side or bottom side (28).

13. The insect trap (10) according to one of the claims 1 to 12, which can be mounted in a hanging position or in a standing position, wherein the suction opening (14) is directed upwards, wherein the suction duct (16) is extending in an approximately vertical direction, and wherein the front side or bottom side (28) forms a lower horizontal closure.

14. The insect trap (10) according to one of the claims 1 to 13, which comprises within the interior space (20) at least one device for retaining, fixing and/or killing the insects (12), which insects (12) have passed through the suction duct (16) and are situated within the interior space (20) of the trap (10), which is optionally equipped with a device and/or electronic sensor system for detecting the trapped insects (12).

15. A method for attracting and/or trapping flying insects and/or pest insects (12) with an insect trap (10) according to one of the claims 1 to 14, wherein flying insects and/or pest insects (12) are attracted by means of a weak air flow (24) that is emitted from a surface of the insect trap (10), which surface is permeable to air but not permeable to the insects (12), wherein the insects (12), on their way into an interior space (20) of the insect trap (10), pass a suction opening (14), which suction opening (14) continues into a suction duct (16), in which suction duct (16) an air flow (18) prevails, which air flow (18) leads to an interior space (20) of the insect trap (10) and which impinges the suction opening (14) with negative pressure or with a suction current, as the case may be,
which surface, that is at least partially permeable to outflowing air (24), forms at least part of an outer wall (22) of the insect trap (10) and surrounds the suction channel (16) in the vicinity of the suction opening (14) and envelops the suction channel (16) in the further region at a varying radial distance and widens in a direction parallel to the direction of the air flow (18) passing through the suction channel (16);
- and with a front side or bottom side (28), which adjoins the outer wall (22) and which is largely impermeable to incoming or outflowing air and which is located opposite the suction opening (14), which front side or bottom side (28) is at least slightly spaced apart from an open front side (30) of the suction duct (16), which open front side (30) is extending into the interior space (20) of the trap (10),
- wherein the outer wall (22) of the insect trap (10) opens or widens starting from a region enclosing the suction duct (16) in the vicinity of the suction opening (14) and extending in the direction of the front side or bottom side (28), thereby enclosing an acute opening angle to the central axis of the suction duct (16).

## Revendications

1. Piège à insectes (10), en particulier pour attirer et/ou attraper des insectes volants et/ou nuisibles (12),
- avec une ouverture d'aspiration (14) qui se prolonge dans un canal d'aspiration (16) dans lequel règne un courant d'air (18) qui alimente l'ouverture d'aspiration (14) en pression négative ou bien en un courant d'aspiration et qui mène vers un volume intérieur (20) du piège à insectes (10),
- avec une surface qui entoure le canal d'aspiration (16) à proximité de l'ouverture d'aspiration (14) et enveloppe le canal d'aspiration (16) dans l'autre zone à une distance radiale variable et qui s'élargit dans une direction parallèle à la direction du courant d'air (18) passant à travers le canal d'aspiration (16) et qui est au moins en partie perméable à de l'air sortant (24) et forme au moins une partie d'une paroi extérieure (22) du piège à insectes (10),
- et avec une face frontale ou de fond (28) qui est contiguë à la paroi extérieure (22), est dans une large mesure imperméable à de l'air entrant ou sortant et est située en regard de l'ouverture d'aspiration (14), et qui est au moins légèrement espacée d'une face frontale (30) ouverte du canal d'aspiration (16) laquelle s'étend jusque dans le volume intérieur (20) du piège (10),
- dans lequel la paroi extérieure (22) du piège à insectes (10), en partant d'une zone entourant le canal d'aspiration (16) à proximité de l'ouverture d'aspiration (14), s'ouvre ou bien s'élargit en direction de la face frontale ou de fond (28) en incluant un angle d'ouverture aigu par rapport à l'axe central du canal d'aspiration (16).

2. Piège à insectes (10) selon la revendication 1, dont la surface qui est au moins en partie perméable à de l'air sortant (24) et qui forme une partie de la paroi extérieure (22) du piège à insectes (10) présente une structure de type filet (26).

3. Piège à insectes (10) selon la revendication 1 ou 2, dont la face frontale ou de fond (28) est formée par une structure qui est approximativement imperméable à l'air ou bien par un matériau qui est approximativement imperméable à l'air.

4. Piège à insectes (10) selon l'une quelconque des revendications 1 à 3, dans lequel l'angle d'ouverture aigu entre la paroi extérieure (22) du piège à insectes (10) et l'axe central du canal d'aspiration (16) est compris entre environ dix degrés d'angle et environ soixante degrés d'angle, de préférence entre environ vingt degrés d'angle et environ quarante-cinq degrés d'angle.

5. Piège à insectes selon l'une quelconque des revendications 1 à 4, dont la paroi extérieure (22) présente un contour conique ou un contour pyramidal avec au moins trois côtés plats pyramidaux ou un contour bombé entre une zone entourant le canal d'aspiration (16) à proximité de l'ouverture d'aspiration (14) et une zone de transition vers la face frontale ou de fond (28).

6. Piège à insectes (10) selon l'une quelconque des revendications 1 à 5, dans lequel la face frontale ou de fond (28) comprend une collerette (32) qui suit à peu près le contour de la paroi extérieure (22).

7. Piège à insectes (10) selon la revendication 6, dans lequel ladite collerette (32) de la face frontale ou de fond (28) présente une hauteur qui correspond à cinq à dix pour cent de la hauteur totale de la paroi extérieure (22), dans lequel la hauteur de la collerette (32) peut être comprise de préférence entre environ deux et vingt centimètres.

8. Piège à insectes (10) selon l'une quelconque des revendications 1 à 7, qui peut présenter une hauteur totale d'une dizaine à une centaine de centimètres, dans lequel le canal d'aspiration (16) présente un diamètre d'environ trois à une quinzaine de centimètres et la face frontale ou de fond (28) peut présenter un diamètre d'une dizaine à une centaine de centimètres à peu près.

9. Piège à insectes (10) selon l'une quelconque des revendications 1 à 8, dans lequel un courant d'air (18) passant à travers l'ouverture d'aspiration (14) et généré par un courant d'aspiration présente une vitesse d'air de l'ordre d'environ un mètre à une dizaine de mètres par seconde, de préférence d'environ deux à six mètres par seconde, en particulier de quatre mètres par seconde à peu près.

10. Piège à insectes (10) selon l'une quelconque des revendications 1 à 9, dans lequel un courant d'air (24) passant à travers la structure perméable à l'air (26) de la paroi extérieure (22) et pénétrant le piège à insectes (10) vers l'extérieur présente une vitesse d'air de l'ordre d'environ 0,02 à 1,0 mètre par seconde, de préférence de l'ordre d'environ 0,05 à 0,6 mètre par seconde.

11. Piège à insectes (10) selon l'une quelconque des revendications 1 à 10, dans lequel au moins un ventilateur générant le courant d'air (18) est agencé à l'intérieur du canal d'aspiration (16).

12. Piège à insectes (10) selon l'une quelconque des revendications 1 à 11, dans lequel une face frontale (30) du canal d'aspiration (16) dans le volume intérieur (20) du piège à insectes (10) présente une distance par rapport à la face frontale ou de fond (28) qui correspond à peu près à la hauteur de la collerette (32) de la face frontale ou de fond (28).

13. Piège à insectes (10) selon l'une quelconque des revendications 1 à 12, qui peut être monté de manière suspendue ou debout, dans lequel l'ouverture d'aspiration (14) est dirigée vers le haut, dans lequel le canal d'aspiration (16) s'étend dans une direction à peu près verticale, et dans lequel la face frontale ou de fond (28) forme une terminaison horizontale inférieure.

14. Piège à insectes (10) selon l'une quelconque des revendications 1 à 13, qui comprend dans le volume intérieur (20) au moins un dispositif qui est destiné à maintenir, à fixer et/ou à tuer les insectes (12) qui ont traversé le canal d'aspiration (16) et se trouvent dans le volume intérieur (20) du piège (10), et qui est équipé en option d'un dispositif et/ou d'un ensemble de capteurs électroniques pour détecter les insectes (12) attrapés.

15. Procédé destiné à attirer et/ou à attraper des insectes volants et/ou nuisibles (12) au moyen d'un piège à insectes (10) conçu selon l'une quelconque des revendications 1 à 14, dans lequel les insectes volants et/ou nuisibles (12) sont attirés au moyen d'un faible courant d'air (24) qui est émis depuis une surface d'un piège à insectes (10) laquelle est perméable à l'air mais non perméable aux insectes (12), dans lequel les insectes (12), lorsqu'ils sont sur le chemin dans un volume intérieur (20) du piège à insectes (10), passent à travers une ouverture d'aspiration (14) qui se prolonge dans un canal d'aspiration (16) dans lequel règne un courant d'air (18) qui alimente l'ouverture d'aspiration (14) en pression négative ou bien en un courant d'aspiration et qui mène vers le volume intérieur (20) du piège à insectes (10),
laquelle surface qui est au moins en partie perméable à de l'air sortant (24) forme au moins une partie d'une paroi extérieure (22) du piège à insectes (10) et entoure le canal d'aspiration (16) à proximité de l'ouverture d'aspiration (14) et enveloppe le canal d'aspiration (16) dans l'autre zone à une distance radiale variable et s'élargit dans une direction parallèle à la direction du courant d'air (18) passant à travers le canal d'aspiration (16);
- et avec une face frontale ou de fond (28) qui est contiguë à la paroi extérieure (22), est dans une large mesure imperméable à de l'air entrant ou sortant et est située en regard de l'ouverture d'aspiration (14), et qui est au moins légèrement espacée d'une face frontale (30) ouverte du canal d'aspiration (16) laquelle s'étend jusque dans le volume intérieur (20) du piège (10),
- dans lequel la paroi extérieure (22) du piège à insectes (10), en partant d'une zone entourant le canal d'aspiration (16) à proximité de l'ouverture d'aspiration (14), s'ouvre ou bien s'élargit en direction de la face frontale ou de fond (28) en incluant un angle d'ouverture aigu par rapport à l'axe central du canal d'aspiration (16).
